# EUROPEAN PATENT APPLICATION

(11) **EP 0 948 889 A1**
(43) Date of publication of application: **13.10.1999**
(21) Application number: 99200927.4
(22) Date of filing: 25.03.1999
(51) Int. Cl.: A01K 31/00, A01K 31/04

(54) **A method for housing poultry for fattening in a stable as well as a device for carrying out such a method**

(30) Priority: 09.04.1998 NL 1008855
(71) Applicant: Jafarco B.V., 5507 RM Veldhoven (NL)
(72) Inventor: Jacobs, Petrus Cornelius Maria, 5507 RM Veldhoven (NL)
(74) Representative: Veldman-Dijkers, Cornelia G.C., Ir.

(57) **Abstract**

A method for housing poultry in a stable (1) on an air permeable bottom (4) provided with a layer of litter, wherein air is led through the bottom from the side of the bottom on which the layer of litter is present. The relative humidity and the temperature of the air in particular near the poultry are controlled.

## Description

The invention relates to a method for housing poultry in a stable on an air permeable bottom provided with a layer of litter.

The invention furthermore relates to a device which is suitable for carrying out such a method.

With a similar method and device known from European patent EP-B1-612, 468, air is led from an air supply channel disposed under the bottom through the bottom and the mixed layer of litter and manure being formed thereon and past the poultry, respectively, after which it is exhausted. The mixed layer of litter and manure is dried by means of said air. Although the method leads to results which are satisfactory per se, it has become apparent that the drying of the mixed layer of litter and manure, which is done inter alia to prevent the emission of ammonia, is only one of the aspects that determine the climate in the stable and thus the conditions in which the poultry are fattened.

With the known method, the air is first led through the mixed layer of litter and manure, as a result of which the air absorbs moisture from the mixed layer of litter and manure, causing the temperature of the air to decrease and the relative humidity level to increase. This air is then led past the poultry. The body temperature of the poultry causes the temperature of the air to increase. Furthermore, the poultry emit moisture upon exhaling, as a result of which the moisture content of the air will increase. It has become apparent that the temperature, and in particular the relative humidity of the air near the poultry is of essential importance for the living comfort of the poultry.

It is in this regard that the limitations of the known method become apparent, however. Preferably, the humidity of the air exiting the mixed layer of litter and manure should be close to 100% for drying the mixed layer of litter and manure with a minimum amount of energy. Such a relative humidity level is unacceptable for the poultry, however, because at that level the poultry are no longer able to lose the moisture being emitted upon exhaling. The moisture absorption of the air is also high when the air temperature is relatively high. This is also unacceptable for the poultry, however, since the poultry will no longer be able to lose the body heat being produced when the temperature is relatively high.

The objective of the invention is to provide a method and a device wherein the advantage of the known method and device for keeping poultry on a layer of litter which is dried by means of air is retained whilst avoiding the drawbacks of a known method and device.

This objective is accomplished with the method according to the invention in that air is led through the bottom from the side of the bottom on which the layer of litter is present, wherein at least the relative humidity of the air near the poultry is measured, after which at least one air condition of the air flowing towards the poultry is controlled.

By reversing the direction of flow of the air, as it were, the relative humidity and any other air conditions, such as the temperature near the poultry, are only influenced by the relative humidity and the temperature of the air flowing towards the poultry and by the heat and moisture emitted by the poultry. The temperature of the air being led into the mixed layer of litter and manure is relatively high, due to the emission of heat by the poultry, and consequently said air is capable of absorbing relatively much moisture from the mixed layer of litter and manure. The air exiting from the mixed layer of litter and manure may have a relatively high relative humidity, which is no longer disadvantageous for the poultry, since this air no longer reaches the poultry.

It is noted that from FR-A-2,600,488 a method and a device are known wherein air is led through an air permeable bottom from an upper side. With this known method no litter is used, however, so that the living comfort of the birds is considerably lower than with the method according to the invention. Moreover, with the method as disclosed in FR-A-2,600,488 the relative humidity of the air near the birds is not measured.

One embodiment of the method according to the invention is characterized in that the relative humidity and/or the temperature of the air flowing towards the poultry is (are) measured, after which the relative humidity and/or the temperature of the air flowing towards the poultry is (are) controlled in dependence on the measured relative humidity and/or temperature of the air near the poultry and the desired values thereof.

By measuring the relative humidity as well as the temperature of the air near the poultry, the relative humidity and the temperature of the air flowing towards the poultry can be precisely controlled. With the method according to the invention, the energy consumption for effecting the desired temperature and relative humidity of the air is considerably lower than with the known method, inter alia because the heat emitted by the poultry is used for withdrawing moisture from the mixed layer of litter and manure being formed.

Another embodiment of the method according to the invention is characterized in that the bottom comprises an air permeable conveyor belt, on which the layer of litter is present, wherein, after the poultry have been fattened for a particular period of time, the conveyor belt and the mixed layer of litter and manure that has formed thereon are moved and the mixed layer of litter and manure is discharged, whilst a part of the conveyor belt provided with a fresh layer of litter is placed under the poultry.

In this manner, the living comfort of the poultry is further enhanced.

The device according to the invention is characterized in that said device comprises a building, cages present in said building, at least one air permeable conveyor belt capable of movement under said cages, which forms a bottom to be provided with a layer of litter, an air exhaust channel disposed under said conveyor belt and an air conditioning installation for controlling at least the relative humidity of the air in the cages flowing through the conveyor belt towards the air exhaust channel.

Thus, it is possible in a relatively simple manner to obtain a device wherein the comfort of the poultry for fattening is relatively high, whilst the mixed layer of litter and manure being formed can at the same time be dried in an effective manner, with the amount of energy required for conditioning the air being relatively small.

The invention will be explained in more detail with reference to the drawings, in which:
Figure 1 is a schematic side view of a device according to the invention;
Figure 2 is another side view of the device according to the invention;
Figure 3 is a plan view of the device which is shown in Figure 2; and
Figure 4 is a front view of a part of the device which is shown in Figure 2.

Corresponding parts are indicated by the same numerals in the figures.

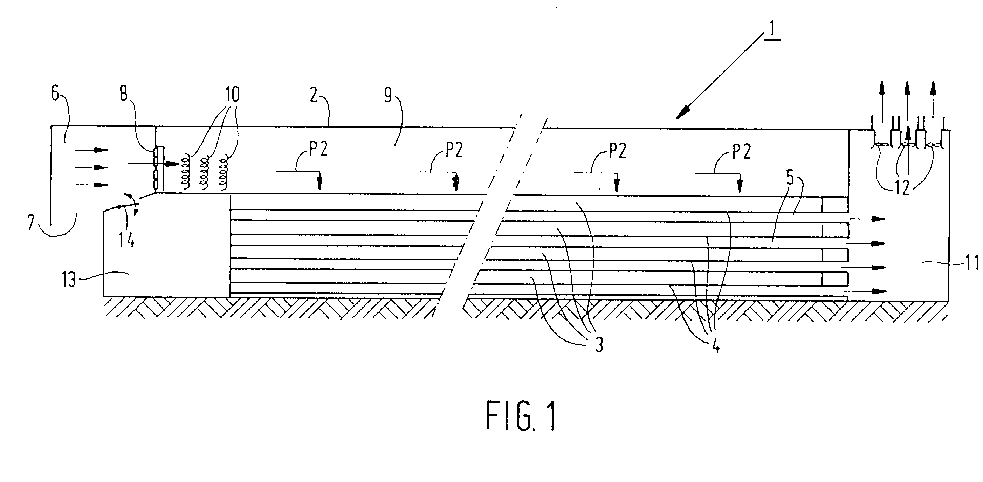

Figure 1 shows a device 1 according to the invention, which comprises a building 2, in which a plurality of elongated cages 3 stacked one on top of another are disposed. Each cage 3 is provided on its bottom side with an air permeable bottom 4, on which litter is present, and an elongated air exhaust channel 5 disposed under said bottom 4. Device 1 furthermore comprises an air supply chamber 6, which is in open communication with the outside air on one side and which is on the other side provided with fans 8, by means of which outside air is introduced under pressure into a mixing chamber. Mixing chamber 9 is in open communication with side walls of the cages 3. Mixing chamber 9 is provided with heating elements 10 near said fans 8, which heating elements form part of an air conditioning plant. Device 1 furthermore comprises a vacuous chamber 11, which is in open communication with air exhaust channels 5. Vacuous chamber 11 is furthermore provided with fans 12, by means of air can be blown from vacuous chamber 11 to outside building 2.

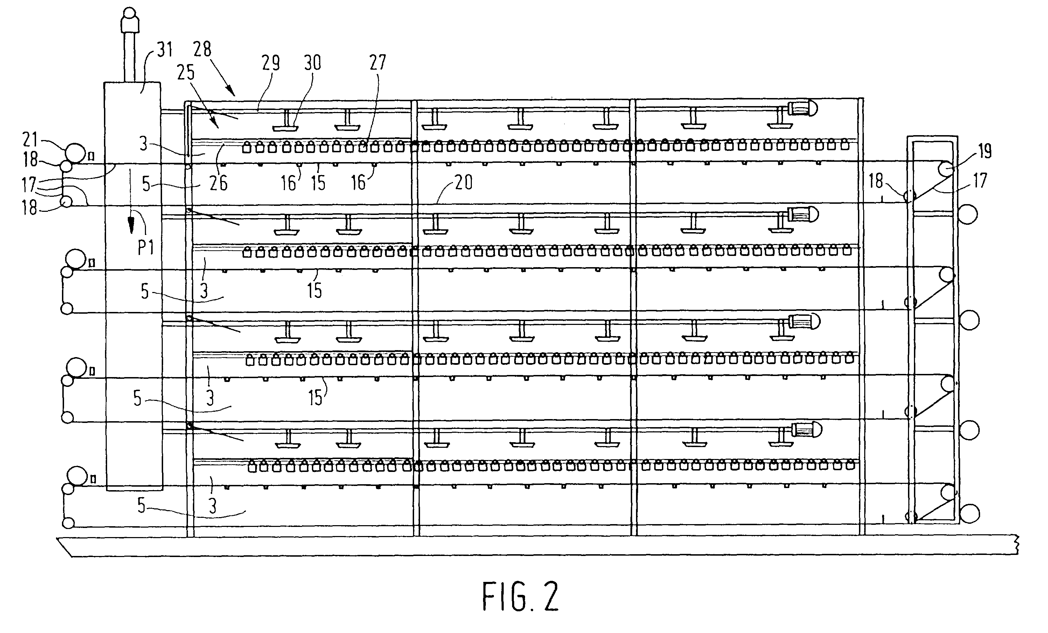

Device 1 furthermore comprises a recirculation chamber 13, which is in open communication with cages 3 and which is in communication, via a closable valve 14, with air supply chamber 6. Figure 2 shows an enlarged side view of cages 3, which are each provided on their bottom side with an air permeable conveyor belt 15, which is supported by rods 16 extending transversely to the plane of the drawing. Conveyor belt 15 is furthermore supported by a number of endless steel cables 17, which are passed over drums 18, 19. A cloth 20 is supported on the steel cables 17 that extend between lower drums 18, which cloth closes air exhaust channel 5 on the underside. Air exhaust channel 5 is closed by rigid walls (not shown) on its sides. One end of the air permeable conveyor belt 15 or the cloth 20 may be selectively connected to drum 19, after which rotation of drum 19 will result in the conveyor belt 15 or cloth 20 being wound on drum 19. The end of conveyor belt 15 remote from drum 19 is wound on a further drum 21, which part is placed under the cages when conveyor belt 15 is being wound on drum 19.

Each cage 3 is furthermore provided with a water supply system 25, which comprises a water supply line 26 and a number of water supply nipples 27 mounted thereon. Each cage 3 is furthermore provided with a feed supply system 28, which comprises a feed supply line 29 and feeders 30 suspended therefrom. Feed supply line 29 is connected to a central feed supply system 31. The central feed supply system 31 can be moved, together with supply line 29, in a downward direction indicated by arrow P1 for the purpose of placing feeders 30 on conveyor belt 15 when used with relatively young poultry.

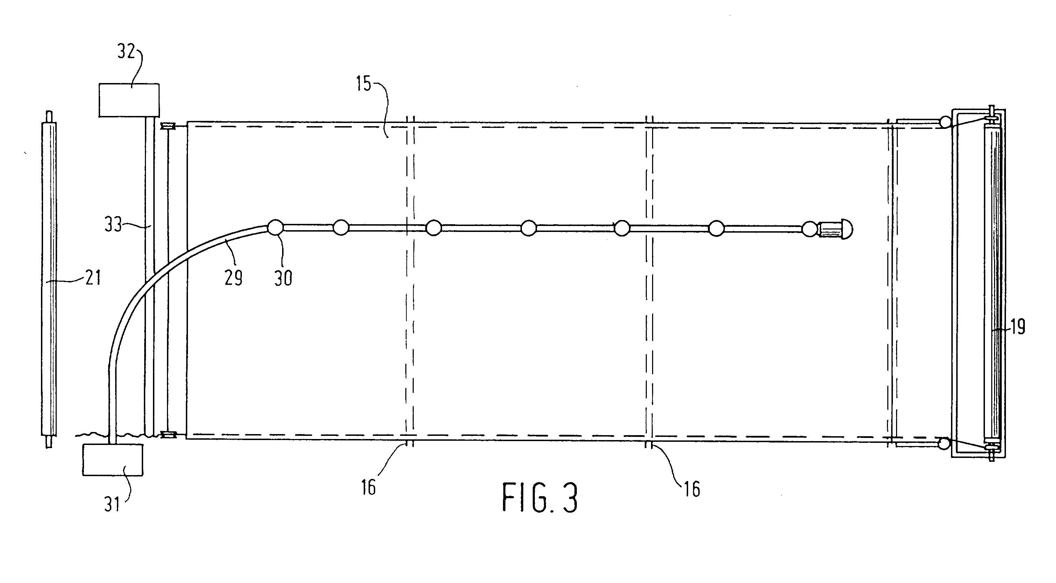

Figure 3 shows a plan view of a cage 3 of the device 1 which is shown in Figure 2, which is furthermore provided with a storage buffer 32 for litter, which comprises a litter supply line 33 extending transversely to the direction of transport of conveyor belt 15.

The operation of device 1 will now be briefly explained. Poultry, for example chicks for fattening or laying hens, are placed on the conveyor belt 15, on which litter is present, wherein the poultry is supplied with water and feed by means of water supply system 25 and feed supply system 28, respectively. The excrements produced by the poultry will fall on said litter. Outside air is led from air supply chamber 6 into intermediate space 9 by means of fans 8, via heating elements 10, if desired, and subsequently in the direction indicated by arrow P2 to cages 3, where the air enters cages 3 via the side walls of said cages. Air is drawn into vacuous chamber 11, as a result of which the air present in cages 3 flows through conveyor belt 15 into air exhaust channels 5, from where it is exhausted into the outside air by means of fans 12 again. The air will dry the mixed layer of litter and manure being formed on conveyor belt 15 upon passing through conveyor belt 5.

The mixed layer of litter and manure being formed can be replaced by a fresh layer of litter by winding up conveyor belt 15 by means of drum 19 in a direction towards drum 19, whereupon a clean portion of the conveyor belt 15 is supplied from drum 21, on which litter is placed by means of litter supply line 33.

In order to be able to control the living conditions of the poultry and the emission inter alia of ammonia from the mixed layer of litter and manure, the temperature and the relative humidity of the outside air, of the air which flows to the poultry, of the air near the poultry in cage 3 and of the air which is present in the air exhaust channels 5 are measured by means of sensors. It is also possible to measure the temperature and the relative humidity in vacuous chamber 11 instead of in air exhaust channels 5, since no change in the air conditions takes place between air exhaust channels 5 and vacuous chamber 11. The measured values are supplied to a control unit (not shown). In said control unit, the measured temperature and relative humidity values of the air near the poultry are compared with the desired temperature of about 27 °C and the relative humidity of about 55%. If the temperature and the relative humidity deviate from the desired value, the air being supplied to supply chamber 5 will be heated by means of the air conditioning device, using heating elements 10, or said air may be moistened or dried by means which are suitable for that purpose.

If desired, valve 14 can be opened, as a result of which air being under an excess pressure will flow from the cages to air supply chamber 6, where it is mixed with the outside air which is flowing in.

The relative humidity of the air in air exhaust channel 5 or vacuous chamber 11 is relatively high, whilst the temperature is relatively low in comparison with the device wherein the air flow is led through cages 3 in upward direction. Measurements have shown that in a device in which 48,000 45-day-old chicks were present, the heat production per chick amounted to about 15.5 W. The moisture emission per chick amounted to 8.86 g per hour, whilst the moisture production in the manure per chick amounted to 5.64 g per hour. The desired temperature near the poultry was 27 °C, whilst the desired relative humidity near the poultry was 55%. It has become apparent with the device according to the invention that only in case of a relatively low outside temperature, for example 12 °C, some preheating of the air is required. At higher outside temperatures, heating of the air is not necessary. With the device in which an upward air flow takes place, as disclosed in European patent EP-B1-612,468, a considerable amount of energy is required for said heating, it amounts to about 6 times the energy requirement of the device according to the invention.

The device according to the invention is furthermore relatively insensitive to small measuring errors. Since the air flow takes place in downward direction, less dust is produced in the cages, and the desired climate for the poultry can be controlled more easily as a result of an improved discharge of heat and moisture from the poultry, whilst furthermore the mixed layer of litter and manure being formed is dried in an effective manner.

If desired, it is possible to pass the air flowing from the vacuous chamber 11 through a heat exchanger and to utilize the heat thus withdrawn from the air for heating the air flowing into air supply chamber 6. With such a device, the temperature and the humidity level of the air can be measured before the heat exhanger present in air intake chamber 6, after said heat exchanger and before heating elements 10, after heating device 10, near the poultry, under the mixed layer of litter and manure being formed and after the heat exchanger in vacuous chamber 11. Such measurements provide an insight into the development of the temperatures and relative humidity levels of the air in the entire device, which makes it possible to achieve an optimum climate control.

## Claims

1. A method for housing poultry in a stable on an air permeable bottom provided with a layer of litter, characterized in that air is led through the bottom from the side of the bottom on which the layer of litter is present, wherein at least the relative humidity of the air near the poultry is measured, after which at least one air condition of the air flowing towards the poultry is controlled.

2. A method according to claim 1, characterized in that the temperature of the air is controlled.

3. A method according to claim 2, characterized in that the temperature of the air near the poultry is measured, after which at least one air condition of the air flowing towards the poultry is controlled.

4. A method according to any one of the preceding claims, characterized in that the relative humidity and/or the temperature of the air flowing towards the poultry is (are) measured, after which the relative humidity and/or the temperature of the air flowing towards the poultry is (are) controlled in dependence on the measured relative humidity and/or temperature of the air near the poultry and the desired values thereof.

5. A method according to any one of the preceding claims, characterized in that the relative humidity and/or the temperature of the air present under said air permeable bottom is (are) measured, after which the relative humidity and/or the temperature of the air flowing towards the poultry is (are) controlled also in dependence on the measured relative humidity and/or temperature of the air near the poultry and the desired values thereof.

6. A method according to any one of the preceding claims, characterized in that the relative humidity and/or the temperature of the mixed layer of litter and manure being formed is (are) measured, after which the relative humidity and/or the temperature of the air flowing towards the poultry is (are) controlled.

7. A method according to any one of the preceding claims, characterized in that the bottom comprises an air permeable conveyor belt, on which the layer of litter is present, wherein, after the poultry have been fattened for a particular period of time, the conveyor belt and the mixed layer of litter and manure that has formed thereon are moved and the mixed layer of litter and manure is discharged, whilst a part of the conveyor belt provided with a fresh layer of litter is placed under the poultry.

8. A method according to claim 7, characterized in that the point in time at which the mixed layer of litter and manure is replaced by a fresh layer of litter by means of said conveyor belt is determined in dependence on the measured relative humidity and/or the temperature of the air near the poultry and of the air to be exhausted under said conveyor belt.

9. A method according to claim 7, characterized in that the point in time at which the mixed layer of litter and manure is replaced by a fresh layer of litter by means of said conveyor belt is determined in dependence on the pressure drop between the air above the mixed layer of litter and manure and the air under the conveyor belt.

10. A method according to any one of the preceding claims, characterized in that the poultry are fattened in a building, wherein the relative humidity and/or the temperature of the air present outside the building is (are) measured, which measured values are then compared with the desired values of the relative humidity and/or the temperature of the air flowing towards the poultry, after which the relative humidity and/or the temperature of the air flowing into the building is (are) controlled.

11. A device suitable for carrying out the method according to any one of the preceding claims, characterized in that said device comprises a building, cages present in said building, at least one air permeable conveyor belt capable of movement under said cages, which forms a bottom to be provided with a layer of litter, an air exhaust channel disposed under said conveyor belt and an air conditioning installation for controlling at least the relative humidity of the air in the cages flowing through the conveyor belt towards the air exhaust channel.

12. A device according to claim 11, characterized in that said device comprises means for measuring the relative humidity and/or the temperature of the air near the poultry, which means are connected to a control unit, by means of which the desired values of the relative humidity and/or the temperature of the air flowing into the building can be determined by means of the air conditioning plant in dependence on the measured values and the desired values of the relative humidity and/or the temperature of the air near the poultry.

13. A device according to claim 11 or 12, characterized in that a particular overpressure can be realised in the building by means of said air conditioning plant.

14. A device according to any one of the claims 11-13, characterized in that said building comprises a vacuous chamber, to which the air exhaust channel is connected.

15. A device according to any one of the claims 11-14, characterized in that said air conditioning plant is provided with heating means.

16. A device according to any one of the preceding claims 11 - 15, characterized in that said device comprises means for moving the conveyor belt whilst the poultry remain in the cages, wherein a mixed layer of litter and manure that has formed on said conveyor belt is discharged and a part of the conveyor belt provided with a fresh layer of litter is placed under said cages.
